# EUROPÄISCHE PATENTSCHRIFT

(11) **EP 0 998 627 B1**
(45) Veröffentlichungstag und Bekanntmachung des Hinweises auf die Patenterteilung: **02.10.2002**
(21) Anmeldenummer: 98945015.0
(22) Anmeldetag: 21.07.1998
(51) Int. Cl.: F01N 3/20, B01D 53/94

(54) **ABGASREINIGUNGSANLAGE FÜR DAS ABGAS EINES DIESELMOTORS**
EXHAUST GAS CONTROL SYSTEM FOR DIESEL ENGINE EXHAUST GASES
SYSTEME D'EPURATION DES GAZ D'ECHAPPEMENT D'UN MOTEUR DIESEL

(30) Priorität: 24.07.1997 DE 19731865
(43) Veröffentlichungstag der Anmeldung: 10.05.2000
(73) Patentinhaber: SIEMENS AKTIENGESELLSCHAFT, 80333 München (DE)
(72) Erfinder: MATHES, Wieland, D-96247 Michelau (DE); WITZEL, Frank, D-96215 Lichtenfels (DE); SCHNAPP, Steffen, D-96257 Marktgraitz (DE)
(86) Internationale Anmeldenummer: DE9802048
(87) Internationale Veröffentlichungsnummer: WO99005402

(56) Entgegenhaltungen:
- EP-A- 0 558 452
- WO-A-93/00990
- DE-A- 3 642 612
- DE-A- 4 203 807

## Beschreibung

Die Erfindung bezieht sich auf eine Abgasreinigungsanlage für das Abgas eines Dieselmotors, bei der in einem Abgasrohr eine Eindüs-Einrichtung für ein Reduktionsmittel, eine Mischeinrichtung und eine Katalysator-Einrichtung angeordnet sind.

Eine Anlage der eingangs genannten Art wird unter der Bezeichnung SiNOx-Abgasreinigungssystem von der Firma Siemens AG, Berlin und München, Deutschland, vertrieben (Firmenbroschüre "SINOx Stickoxidminderung für stationäre Dieselmotoren", Bestell-Nr. A96001-U91-A232. Mit einer solchen Anlage kann die Stickoxid-Emission eines Dieselmotors drastisch reduziert werden. Die Funktionsweise des SiNOx-Abgasreinigungssystems basiert auf dem SCR-Verfahren (Selective Catalytic Reduction). Dabei werden die Stickoxide des Abgases mit einem Reduktionsmittel, wie Ammoniak oder Harnstoff, im Abgasrohr vermischt, in einen Reaktorraum geleitet und dort an der Katalysator-Einrichtung zu den umweltfreundlichen Stoffen Wasserstoff und Stickstoff umgesetzt. Zur Vermischung des Reduktionsmittels mit dem Abgas wird ein statischer Mischer eingesetzt.

Aus der EP 0 558 452 B1 ist es bekannt, in einer kompakt aufgebauten Abgas-Reinigungsanlage drei Kanäle hintereinander anzuordnen, nämlich einen Pyrolysationskanal, einen Mischkanal und einen Reaktionskanal. Im Pyrolysationskanal befindet sich ein Zweistoff-Düsen-Apparat, mit dem wässrige Harnstofflösung unter Wirkung von Druckluft in den Abgasstrom eingesprüht wird. Hier erfolgt die Pyrolyse, d.h. die Zersetzung des Harnstoffs in Ammoniak und Kohlendioxid. Im Mischkanal befinden sich drei Kreuzmischer, die für eine Durchmischung der verschiedenen Substanzen sorgen. Der durchmischte Abgasstrom wird sodann in den Reaktionskanal geleitet, wo er durch zwei Reduktions(SCR-)Katalysatoren und dann durch einen Oxidationskatalysator geführt wird. Der von gasförmigen Schadstoffen befreite Abgasstrom wird anschließend nach außen abgeleitet.

Bei engen Einbauverhältnissen für SiNOx-Diesel-Abgasreinigungsanlagen, speziell bei Landfahrzeugen, wie LKW, PKW, Bus oder Lokomotiven, aber auch bei Seefahrzeugen, wie bei Überwasserschiffen, erweist es sich als problematisch, eine Gleichverteilung des Reduktionsmittels im Abgas sicherzustellen. Durch Krümmungen im Abgasrohr entsteht nämlich eine Ungleichverteilung der Abgasströmung, nämlich ein einseitiges Strömungsprofil, und damit eine Ungleichverteilung des eingedüsten Reduktionsmittels. Bei einer kurzen Verdüsungsstrecke aufgrund sehr kleinen Bauraums reicht somit die Verweilzeit des Reduktionsmittels im Abgasstrom nicht aus, um eine Gleichverteilung vor dem Eintritt in die SCR-Katalysator-Einrichtung sicherzustellen. Dadurch werden die einzelnen Ebenen oder Module in der Katalysator-Einrichtung ungleichmäßig mit dem Reduktionsmittel beaufschlagt, was sich in einem relativ niedrigen Umsatz an Stickoxiden bemerkbar macht.

Aus der DE 42 03 807 A1 ist hierzu eine Abgasreinigungsanlage bekannt, bei der ein Eingangsabgasrohr senkrecht zur Hauptachse eines Abgasrohrs angeschlossen ist. In dem Abgasrohr ist eine Eindüs-Einrichtung für ein Reduktionsmittel, eine Misch-Einrichtung und eine Katalysator-Einrichtung angeordnet. Die Misch-Einrichtung ist - in Strömungsrichtung des Abgases betrachtet - vor der Eindüs-Einrichtung angeordnet. Durch das senkrecht zur Hauptachse des Abgasrohrs angeschlossene Eingangsabgasrohr wird das Abgas tangential in das Abgasrohr eingeführt. Der dadurch hervorgerufene Drall im Abgas wird über die Misch-Einrichtung zum Mischen des Abgases mit dem über die Eindüs-Einrichtung eingebrachten Reduktionsmittel ausgenutzt. Nachteiligerweise führt jedoch ein derartiger, durch tangentiales Einführen hervorgerufener Drall zu einer Ungleichverteilung des Abgases entlang der radialen Richtung.

Die erreichbare Durchmischung des Abgases mit dem Reduktionsmittel ist unbefriedigend, zumal die Eindüs-Einrichtung zentral in der Mitte des Abgasrohrs angeordnet ist.

Auch aus der DE 36 42 612 A1 ist eine Abgasreinigungsanlage bekannt, bei der das Abgas unmittelbar im Bereich einer Eindüseinrichtung für die Reduktionsmittellösung umgelenkt wird, wobei in diesem Bereich zugleich Strömungselemente angeordnet sind, die den Strömungsquerschnitt verringern und dadurch eine Durchmischung des eingedüsten Reduktionsmittels mit dem Abgas bewirken. Auch hier ist jedoch in nachteiliger Weise eine Umlenkung des Abgases vorgesehen, so dass eine Ungleichverteilung der Abgasströmung und insbesondere ein einseitiges Strömungsprofil erzeugt wird.

Aufgabe der vorliegenden Erfindung ist es, eine Abgasreinigungsanlage der vorgenannten Art derart auszugestalten, daß bei kurzer Verdüsungsstrecke eine Gleichverteilung des Reduktionsmittels im Abgas sichergestellt ist.

Diese Aufgabe wird erfindungsgemäß durch eine Abgasreinigungsanlage mit den Merkmalen des Anspruchs 1 gelöst.

Für eine gute Durchmischung ist eine Mischeinrichtung vor der Eindüseinrichtung und eine weitere Mischeinrichtung zwischen der Eindüs-Einrichtung und der Katalysator-Einrichtung angeordnet. Diese weitere Mischeinrichtung ist dabei an einer Stelle angeordnet, an der sich das Abgasrohr zur Aufnahme der Katalysatoreinrichtung erweitert. Von Bedeutung für eine Gleichverteilung ist weiterhin, daß das Eingangsabgasrohr entlang der Hauptachse des Abgasrohrs ausgerichtet ist. Mit anderen Worten: Es findet beim Durchströmen des Eingangsabgasrohrs in das Abgasrohr keine Umlenkung des Abgases statt. Das Abgas wird parallel zum Abgasrohr eingeführt.

Hierbei kann die Katalysator-Einrichtung mehrere Ebenen umfassen, von denen jede ein SCR-Katalysator-Modul ist. Abweichend davon kann aber die Katalysator-Einrichtung auch mehrere Ebenen umfassen, von denen die erste Ebene ein Hydrolyse-Katalysator-Modul und jede weitere Ebene ein SCR-Katalysator-Modul ist.

Ausführungsbeispiele der Erfindung werden im folgenden anhand von drei Figuren näher erläutert. Für gleiche Bauelemente werden dieselben Bezugszeichen verwendet. Es zeigen:
- FIG 1: eine nicht erfindungsgemäße, erste Abgasreinigungsanlage mit Anordnung des Eingangsabgasrohrs entlang der Hauptachse des Abgasrohrs und mit Einsatz von drei SCR-Katalysator-Modulebenen,
- FIG 2: eine nicht erfindungsgemäße, zweite Abgasreinigungsanlage mit Anordnung des Eingangsabgasrohrs entlang der Hauptachse des Abgasrohrs und mit Einsatz von einer Hydrolyse-Katalysator-Modulebene und zwei darauffolgenden SCR-Katalysator-Modulebenen, und
- FIG 3: eine erfindungsgemäße dritte Abgasreinigungsanlage, bei der zusätzlich zu der Anlage von Figur 1 eine weitere Misch-Einrichtung vorgesehen ist.

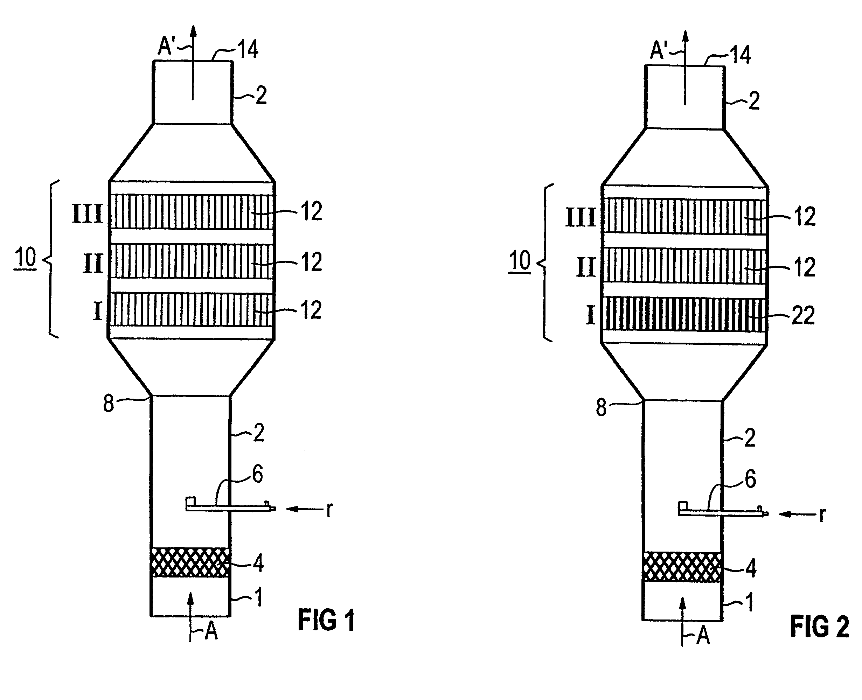

Nach Figur 1 wird von einem (nicht gezeigten) Dieselmotor ein Abgas A abgegeben, das (z.B. über einen nicht gezeigten Verdichter oder Turbogenerator) in ein Eingangsabgasrohr 1 und in ein daran angeschlossenes Abgasrohr 2 geleitet wird. Das Eingangsabgasrohr 1 ist entlang der Hauptachse des Abgasrohrs 2 ausgerichtet. Eine Umlenkung des Abgases findet nicht statt. Im Abgasrohr 2 befindet sich eine statische Misch-Einrichtung 4, insbesondere ausgebildet gemäß EP 0 594 657. In Strömungsrichtung nachfolgend ist eine Eindüs-Einrichtung 6 für ein Reduktionsmittel r angeordnet. Bei diesem Reduktionsmittel kann es sich um Ammoniak (NH₃), insbesondere aber um eine wäßrige Lösung von Harnstoff handeln. An einer Übergangsstelle 8 erweitert sich das Abgasrohr 4 zur Aufnahme einer Katalysator-Einrichtung 10. Diese Katalysator-Einrichtung 10 umfaßt vorliegend drei übereinander angeordnete Ebenen I, II und III. Jede dieser Ebenen I, II und III ist ein SCR-Katalysator-Modul 12 und dient der Beseitigung von Stickoxiden (NOₓ) im Abgas A. Das auf diese Weise gereinigte Abgas A' verläßt das Abgasrohr 2 über eine Austrittsöffnung 14.

Die in Figur 1 dargestellte Abgasreinigungsanlage zeigt eine Verbesserung der Strömungs- und Reduktionsmittel-Gleichverteilung.

Nach Figur 2 ist eine zweite Abgasreinigungsanlage vorgesehen, die im unteren Bereich derjenigen von Figur 1 entspricht. Im Gegensatz von Figur 1 ist hier die erste Ebene I als Hydrolyse-Katalysator-Modul 22 ausgebildet.

Auch hier läßt sich eine Verbesserung der Strömungs- und Reduktionsmittel-Gleichverteilung erzielen. Zusätzlich läßt sich eine Verringerung des Bauraums erreichen.

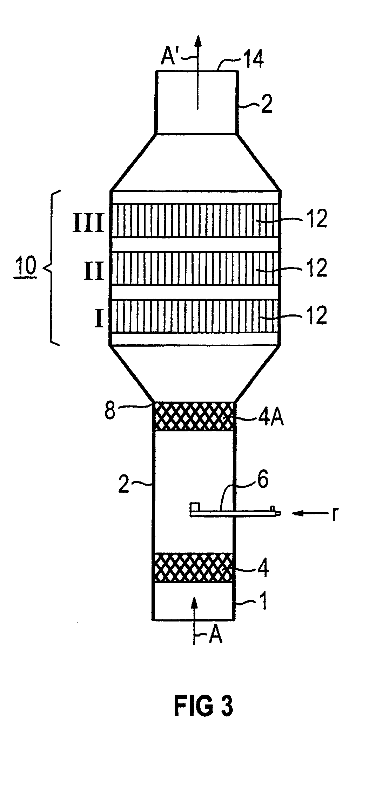

Die dritte Abgasreinigungsanlage nach Figur 3 entspricht weitgehend derjenigen von Figur 1. Zusätzlich ist hier eine weitere Misch-Einrichtung 4A vorgesehen. Diese ist vorzugsweise an der Übergangsstelle 8, also vor dem sich erweiternden Übergang vom zylindrischen Abgasrohr 2 in den Katalysator-Reaktorraum, vorgesehen.

Bei der Ausführungsform gemäß Figur 3 ergibt sich gegenüber dem Stand der Technik eine Verbesserung der Strömungs- und Reduktionsmittel-Gleichverteilung sowie eine Reduzierung des Bauraums. Darüber hinaus ergibt sich eine Aufweitung der Strömung, denn der Mischer 4A bzw. 4B fungiert jeweils als Leitblech.

## Patentansprüche

1. Abgasreinigungsanlage für das Abgas (A) eines Dieselmotors, bei der ein Eingangsabgasrohr (1) an ein Abgasrohr (2) angeschlossen ist, bei der im Abgasrohr (2) eine Eindüs-Einrichtung (6) für ein Reduktionsmittel (r), eine Misch-Einrichtung (4) und eine Katalysator-Einrichtung (10) angeordnet sind und bei der das Eingangsabgasrohr (1) entlang der Hauptachse des Abgasrohrs (2) ausgerichtet ist, wobei die Misch-Einrichtung (4) - in Strömungsrichtung des Abgases (A) gesehen - vor der Eindüs-Einrichtung (6) angeordnet ist, und wobei eine weitere Misch-Einrichtung (4A) an einer Stelle angeordnet ist, an der sich das Abgasrohr (2) zur Aufnahme der Katalysator-Einrichtung (10) erweitert.

2. Abgasreinigungsanlage nach Anspruch 1,
**dadurch gekennzeichnet, daß** die Katalysator-Einrichtung (10) mehrere Ebenen (I, II, III) umfaßt, von denen jede ein SCR-Katalysator-Modul (12) ist.

3. Abgasreinigungsanlage nach Anspruch 1,
**dadurch gekennzeichnet, daß** die Katalysator-Einrichtung (10) mehrere Ebenen (I, II, III) umfaßt, von denen die erste Ebene (I) ein Hydrolyse-Katalysator-Modul (22) und jede weitere Ebene (II, III) ein SCR-Katalysator-Modul (12) ist.

## Claims

1. Exhaust emission control system for the exhaust gas (A) of a diesel engine, in which an exhaust gas inlet pipe (1) is connected to an exhaust pipe (2), in which an injection device (6) for a reducing agent (r), a mixing device (4) and a catalyst device (10) are arranged in the exhaust pipe (2), and in which the exhaust gas inlet pipe (1) is aligned along the main axis of the exhaust pipe (2), the mixing device (4) being arranged upstream of the injection device (6) - seen in the direction of flow of the exhaust gas (A) - and a further mixing device (4A) being arranged at a point at which the exhaust pipe (2) widens for receiving the catalyst device (10).

2. Exhaust emission control system according to Claim 1, **characterized in that** the catalyst device (10) comprises a plurality of levels (I, II, III), each of which is an SCR catalyst module (12).

3. Exhaust emission control system according to Claim 1, **characterized in that** the catalyst device (10) comprises a plurality of levels (I, II, III), of which the first level (I) is a hydrolysis-catalyst module (22) and every other level (II, III) is an SCR catalyst module (12).

## Revendications

1. Système d'épuration des gaz d'échappement pour les gaz (A) d'échappement d'un moteur diesel, dans lequel un tuyau (1) d'entrée des gaz d'échappement est raccordé à un tuyau (2) pour des gaz d'échappement, dans lequel il est monté dans le tuyau (2) pour des gaz d'échappement un dispositif (6) d'injection d'un agent (r) réducteur, un dispositif (4) de mélange et un pot (10) catalytique et dans lequel le tuyau (1) d'entrée des gaz d'échappement est dirigé le long de l'axe principal du tuyau (2) pour des gaz d'échappement, le dispositif (4) de mélange étant monté, considéré dans le sens du courant des gaz (A) d'échappement, en amont du dispositif (6) d'injection et un autre dispositif (4A) de mélange étant monté en un point où le tuyau (2) pour des gaz d'échappement s'élargit en vue de la réception du pot (10) catalytique.

2. Système d'épuration des gaz d'échappement suivant la revendication 1,
**caractérisé en ce que** le pot (10) catalytique comprend plusieurs plans (I, II, III) dont chacun est un module (12) de pot catalytique SCR.

3. Système d'épuration des gaz d'échappement suivant la revendication 1,
**caractérisé en ce que** le pot (10) catalytique comprend plusieurs plans (I, II, III) dont le premier plan est un module (22) de pot catalytique d'hydrolyse et chaque autre plan (II, III) un module (12) de pot catalytique SCR.
